# EUROPEAN PATENT SPECIFICATION

(11) **EP 3 009 949 B1**
(45) Date of publication and mention of the grant of the patent: **29.08.2018**
(21) Application number: 15198066.1
(22) Date of filing: 14.09.2012
(51) Int. Cl.: G06F 21/00, G06F 15/16, H04L 29/06, G06F 21/55, G06F 21/57

(54) **SYSTEM AND METHOD FOR REAL-TIME CUSTOMIZED THREAT PROTECTION**
SYSTEM UND VERFAHREN FÜR PERSONALISIERTEN ECHTZEITSCHUTZ VOR BEDROHUNGEN
SYSTÈME ET PROCÉDÉ DE PROTECTION DE MENACE PERSONNALISÉE EN TEMPS RÉEL

(30) Priority: 15.09.2011 US 201113233497
(43) Date of publication of application: 20.04.2016
(62) Divisional of application: 12831899.5
(73) Proprietor: McAfee, LLC, Santa Clara, CA 95054 (US)
(72) Inventor: Bu, Zheng, Freemont, CA 94539 (US); Kashyap, Rahul Chander, Foster City, CA 94404 (US); Lin, Yichong, Freemont, CA 94538 (US); Ma, Denys Lok Hang, Mountain View, CA 94043 (US)
(74) Representative: Goddar, Heinz J.

(56) References cited:
- EP-A1- 2 348 448
- MEHDIZADEH ET AL: "IT Security Event Management", 20040521, 21 May 2004 (2004-05-21), pages 1-14, XP007918161, [retrieved on 2011-04-07]

## Description

### TECHNICAL FIELD

This specification relates in general to the field of network security, and more particularly, to a system and method for real-time customized threat protection.

### BACKGROUND

Information systems have become integrated into the daily lives of people and businesses on a global scale, and the field of information security has likewise become increasingly important in today's society. Such wide scaled integration has also presented many opportunities for malicious operators to exploit these systems. If malicious software can infect a host computer, it can perform any number of malicious actions, such as sending out spam or malicious emails from the host computer, stealing sensitive information from a business or individual associated with the host computer, propagating to other host computers, and/or assisting with distributed denial of service attacks. In addition, for some types of malware, a malicious operator can sell or otherwise give access to other malicious operators, thereby escalating the exploitation of the host computers. Thus, the ability to effectively protect and maintain stable computers and systems continues to present significant challenges for component manufacturers, system designers, and network operators.

EP 2 348 448 A1 discloses a method for establishing a security event manager on a mobile device. The security event manager retrieves security policy data that define a set of security even rules for determining the occurrence of a security event. The security event manager further receives security event data that are generated from at least one security event source of the mobile device. An occurrence of a security event is determined based on the security event data and the security policy data in order to provide a response to the security event with the security event manager.

Mehdizadeh et al: "IT Security Event Management", 2004, discloses the functional architecture of security event management, which involves a Security Event Manager (SEM) that provides an enterprise monitoring and administration solution that collects data on events that violate security policies of an organization, analyzes the data, and provides a response to threats on enterprise assets.

The present invention is defined by a method, an apparatus, at least one machine-readable medium and a system according to the independent claims. Preferred embodiments are defined in the dependent claims.

### BRIEF DESCRIPTION OF THE DRAWINGS

To provide a more complete understanding of the present disclosure and features and advantages thereof, reference is made to the following description, taken in conjunction with the accompanying figures, wherein like reference numerals represent like parts, in which:
FIGURE 1 is a simplified block diagram illustrating an example embodiment of a network environment for real-time customized threat protection in accordance with this specification; and
FIGURE 2 is a simplified interaction diagram of potential operations that may be associated with the network environment.
FIGURE 3 is simplified flow diagram of potential operations that may be associated with the network environment.

### DETAILED DESCRIPTION OF EXAMPLE EMBODIMENTS

### OVERVIEW

A method is provided in one example embodiment that includes receiving event information associated with reports from sensors distributed throughout a network environment and correlating the event information to identify a threat. A customized security policy based on the threat may be sent to the sensors. In more particular embodiments, the event information may be received from a threat intelligence cloud. In yet other embodiments, reputation data may also be sent to the threat intelligence cloud based on the threat.

### EXAMPLE EMBODIMENTS

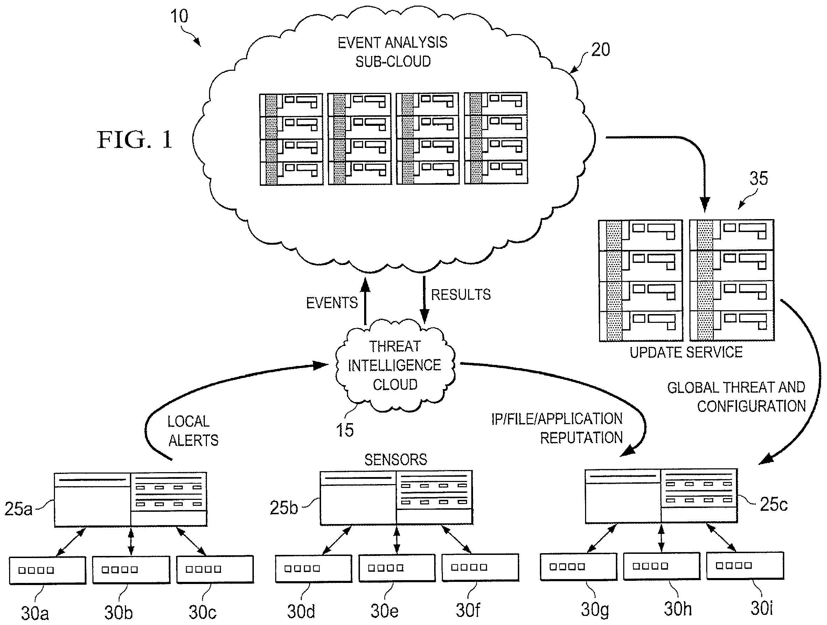

Turning to FIGURE 1, FIGURE 1 is a simplified block diagram of an example embodiment of a network environment 10 in which a system and method for real-time customized threat protection may be implemented. Network environment 10 includes a threat intelligence cloud 15, an event analysis sub-cloud 20, sensors 25a-25c, and hosts 30a-30i. Sensors 25a-25c may include, for example, intrusion prevention systems, gateway appliances, firewalls, antivirus software, and/or other security systems distributed throughout network environment 10 to gather information from hosts 30a-30i across threat vectors, including file, web, message, and network threat vectors. Threat intelligence cloud 15 generally represents an infrastructure for receiving information from sensors 25a-25c and delivering real-time reputation-based threat intelligence derived from that information. Event analysis sub-cloud represents an infrastructure for analyzing information received by threat intelligence cloud 15, and may also provide an update service 35 that can deliver threat information and policy configuration updates to sensors 25a-25c and/or hosts 30a-30i.

Each of the elements of FIGURE 1 may couple to one another through simple network interfaces or through any other suitable connection (wired or wireless), which provides a viable pathway for network communications. Additionally, any one or more of these elements may be combined or removed from the architecture based on particular configuration needs. Network environment 10 may include a configuration capable of transmission control protocol/Internet protocol (TCP/IP) communications for the transmission or reception of packets in a network. Network environment 10 may also operate in conjunction with a user datagram protocol/IP (UDP/IP) or any other suitable protocol where appropriate and based on particular needs.

Before detailing the operations and the infrastructure of FIGURE 1, certain contextual information is provided to offer an overview of some operations that may be occurring within network environment 10. Such information is offered earnestly and for teaching purposes only and, therefore, should not be construed in any way to limit the broad applications for the present disclosure.

A typical network environment includes the ability to communicate electronically with other networks, using the Internet, for example, to access web pages hosted on servers connected to the Internet, to send or receive electronic mail (i.e., email) messages, or to exchange files with end users or servers connected to the Internet. Users normally expect data stored in a network environment to be readily available but secure from unauthorized access. They also usually expect communications to be reliable and secure from unauthorized access. However, malicious users are continuously developing new tactics for interfering with normal operations and gaining access to confidential information. Viruses, Trojans, worms, bots, and other malware are common examples of vehicles used to exploit vulnerabilities in a network or system, but any activity designed to interfere with the normal operation of a computer or network through unauthorized access, destruction, disclosure, modification of data, and/or denial of service is a "threat."

A broad range of countermeasures can be deployed against threats, including firewalls, intrusion prevention systems, network access controls, and web filtering. An intrusion prevention system (IPS), also known as an intrusion detection and prevention system (IDPS), for example, can monitor network and/or system activities for malicious or potentially malicious activity and send an alert. IPS alerts, however, may not always be actionable. Many alerts provide only cautionary information or guidance, even if an observed event is indicative of malicious activity, since a single event may not be sufficient to identify an attack with a suitable degree of confidence.

An IPS is typically placed in-line so that it can actively block detected intrusions, such as by dropping packets, resetting a connection, and/or blocking traffic from a source. An IPS can use multiple detection methods, including application and protocol anomaly, shell-code detection algorithms, and signatures. For example, signature-based detection generally includes comparing a signature (i.e., any pattern that corresponds to a known threat) against observed events or activity to identify a threat. An example signature is an attempt to establish a remote connection as a root user. Another example is receiving an email with a subject line and attached file that are characteristic of a known form of malware.

Signature-based detection can be very effective at detecting a known threat, but can be ineffective at detecting an unknown threat, or even slight variations of a known threat. Moreover, IPS signatures tend to be universal and not generally customized for a local environment. Threats may only be seen locally, without a global view. Knowledge collected from sensors deployed globally cannot generally be leveraged to improve local security policy. Manual adjustment to policies is also often required, which may cause enough delay to allow an infection to spread.

In accordance with embodiments described herein, network environment 10 can overcome these shortcomings (and others) by providing a system and method for correlating global threat intelligence and local threat intelligence, and providing a customized security policy.

Referring again to FIGURE 1 for illustration, hosts 30a-30i may be network elements, which are meant to encompass network appliances, servers, routers, switches, gateways, bridges, load-balancers, firewalls, processors, modules, or any other suitable device, component, element, or object operable to exchange information in a network environment. Network elements may include any suitable hardware, software, components, modules, interfaces, or objects that facilitate the operations thereof. This may be inclusive of appropriate algorithms and communication protocols that allow for the effective exchange of data or information. Hosts 30a-30i may also be representative of other wired or wireless network nodes, such as desktop computers, laptops, or mobile communication devices (e.g., an iPhone, iPad, Android device, etc.).

Threat intelligence cloud 15 is a reputation system in one embodiment, which may be implemented as a distributed filesystem cluster. In general, a reputation system monitors activity and assigns a reputation value or score to an entity based on its past behavior. The reputation value may denote different levels of trustworthiness on the spectrum from benign to malicious. For example, a connection reputation value (e.g., minimal risk, unverified, high risk, etc.) may be computed for a network address based on connections made with the address or email originating from the address. Connection reputation systems may be used to reject email or network connections with IP addresses known or likely to be associated with malicious activity, while file reputation systems can block activity of files (e.g., applications) having hashes known or likely to be associated with malicious activity. Threat intelligence cloud 15 may receive reports from sensors (e.g., sensors 25a-25c) distributed throughout a network, some of which may be in separate domains controlled by separate entities. A collection module may request sensors to periodically send reports to threat intelligence cloud 15, for example, which may be sent anonymously to protect sensitive information. Reports may include event information, such as the source and destination address of a connection, the type of activity, downloaded files, protocols used, etc., and may be actionable (e.g., alerts of varying degrees of severity) or advisory (e.g., providing information about suspicious activity that may not be actionable on its own).

Event analysis sub-cloud 20 represents a cloud infrastructure for storing, processing, and mining events, both historically and in near real-time. Sub-cloud 20 may implement heuristics for data-mining alerts to correlate information from sensors distributed throughout a network (e.g., sensors 25a-25c) and identify new threats. Long-term and short-term profiling algorithms may be run to identify prevalent threats detected by sensors globally and automate responses. Thus, sub-cloud 20 may collect real-time alert information and provide advanced analysis and threat correlation that can be customized per sensor, which can facilitate rapid global threat detection. Live threat information can be sent back to sensors as threats occur. Sub-cloud 20 may retrieve events from threat intelligence cloud 15 (which may receive them as alerts from sensors 25a-25c), or may receive them directly from sensors 25a-25c, and return results that allow threat intelligence cloud to adjust reputation data associated with new threats. Moreover, sub-cloud 20 may also provide updates and new threat intelligence automatically to sensors 25a-25c and/or hosts 30a-30i remotely and in near real-time. Customers may then quickly and proactively act on these updates, protecting their systems by leveraging the processing power and heuristics of sub-cloud 20, as well as global threat intelligence. Sub-cloud 20 can also enable policy configuration suggestions, automatically adjust a policy or signature set configurations, and/or enable other response actions so that new global threats can be identified or blocked with a higher degree of confidence (and without manual configuration).

In certain embodiments, threat intelligence cloud 15 and event analysis sub-cloud 20 may both be implemented as cloud infrastructures. A cloud infrastructure in general is an environment for enabling on-demand network access to a shared pool of computing resources that can be rapidly provisioned (and released) with minimal service provider interaction. Thus, it can provide computation, software, data access, and storage services that do not require end-user knowledge of the physical location and configuration of the system that delivers the services. A cloud-computing infrastructure can include services delivered through shared data-centers, which may appear as a single point of access. Multiple cloud components, such as cloud 15 and sub-cloud 20, can communicate with each other over loose coupling mechanisms, such as a messaging queue. Thus, the processing (and the related data) need not be in a specified, known, or static location. Cloud 15 and sub-cloud 20 may encompass any managed, hosted service that can extend existing capabilities in real time.

In regards to the internal structure associated with network environment 10, each of threat intelligence cloud 15, event analysis sub-cloud 20, sensors 25a-25c, and hosts 30a-30i can include memory elements for storing information to be used in the operations outlined herein. These devices may further keep information in any suitable memory element (e.g., random access memory (RAM), read-only memory (ROM), erasable programmable ROM (EPROM), electrically erasable programmable ROM (EEPROM), application specific integrated circuit (ASIC), etc.), software, hardware, or in any other suitable component, device, element, or object where appropriate and based on particular needs. Any of the memory items discussed herein should be construed as being encompassed within the broad term "memory element." The information being tracked or sent by threat intelligence cloud 15, event analysis sub-cloud 20, sensors 25a-25c, or hosts 30a-30i could be provided in any database, register, table, queue, control list, or storage structure, all of which can be referenced at any suitable timeframe. Any such storage options may also be included within the broad term "memory element," as used herein.

Additionally, threat intelligence cloud 15, event analysis sub-cloud 20, sensors 25a-25c, and hosts 30a-30i may include a number of processors that can execute software or an algorithm to perform activities as discussed herein. A processor can execute any type of instructions associated with memory elements to achieve the operations detailed herein. In one example, the processors could transform an element or an article (e.g., data) from one state or thing to another state or thing.

Note that in certain example implementations, the functions outlined herein may be implemented by logic encoded in one or more tangible media (e.g., embedded logic provided in an ASIC, digital signal processor (DSP) instructions, software (potentially inclusive of object code and source code) to be executed by a processor, or other similar machine, etc.), which may be inclusive of non-transitory media. In some of these instances, memory elements can store data used for the operations described herein. This includes the memory elements being able to store software, logic, code, or processor instructions that are executed to carry out the activities described herein. In another example, the activities outlined herein may be implemented with fixed logic or programmable logic (e.g., software/computer instructions executed by a processor) and the elements identified herein could be some type of a programmable processor, programmable digital logic (e.g., a field programmable gate array (FPGA), an EPROM, an EEPROM) or an ASIC that includes digital logic, software, code, electronic instructions, or any suitable combination thereof. Any of the potential processing elements, modules, and machines described herein should be construed as being encompassed within the broad term "processor."

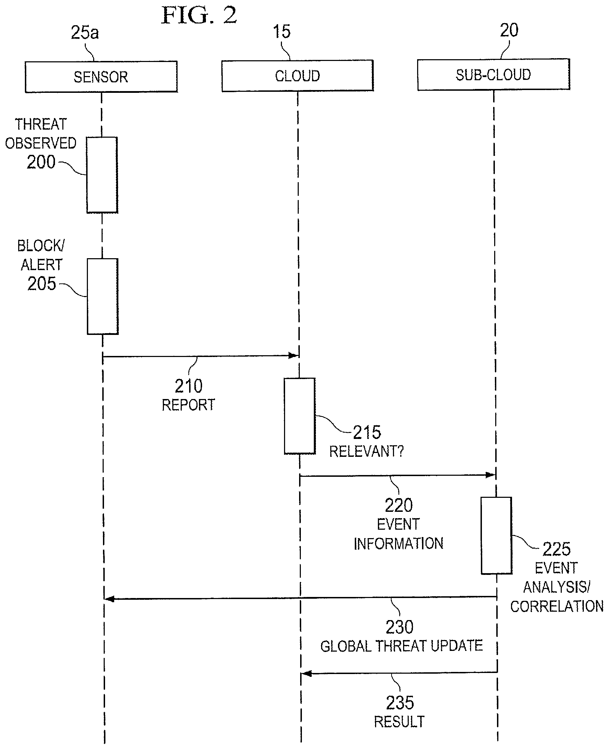

FIGURE 2 is a simplified interaction diagram of potential operations that may be associated with example embodiments of network environment 10 in which sub-cloud 20 is dedicated to analyzing events from IPS sensors. At 200, an IPS sensor (e.g., sensor 25a) may observe activity indicative of a threat, such as host 30b downloading a PDF document with an embedded JAVASCRIPT tag. At 205, the local IPS may block the threat and/or send a local alert. At 210, the event may also be reported to threat intelligence cloud 15. At 215, threat intelligence cloud 15 may determine if the event is relevant to event analysis in sub-cloud 20 (e.g., the report is received from an IPS). If the event is relevant to analysis in sub-cloud 20, threat intelligence cloud 15 may send the event information to sub-cloud 20 at 220. Using various analysis heuristics (e.g., based on time, geolocation, reputation, etc.) at 225, sub-cloud 20 may correlate the event with events reported from other sensors distributed throughout network environment 10 (or subsequent events from the same sensor, such as an unexpected increase in out-of-band traffic) to identify global threats.

For example, a low-severity alert may be set for downloading a portable document format (PDF) file having JAVASCRIPT tags. A local policy may ignore such an event since it is a low-severity alert. However, the reputation and source of such a PDF may be determined based on reports received from multiple sensors throughout the network. By data mining events reported from the distributed sensors, the PDF document may be identified as a threat targeting a particular country, region, or industry by correlating events reported by sensors in that country, region, or industry. A host that downloaded this PDF file from a suspicious address with a bad reputation can also be identified. Suggestions, guidance, and policy change recommendations can then be provided.

At 230, sub-cloud 20 may generate global threat information and inform all IPSs in network environment 10 or within a particular segment (e.g., associated with a particular country) of network environment 10, as well as provide customized security policy/configuration suggestions to them based on threat correlation. Customized security policies can include granular response actions to protect network environment 10 without intervention from an administrator. For example, update service 35 may provide a custom security policy to sensor 25a that identifies an infected host (e.g., host 30b) by address, identifies the type of data loss (if any), and quarantines the infected host, or it may identify a particular address that should be blocked. At 235, sub-cloud 20 may also provide results to threat intelligence cloud 15 to augment other reputation data.

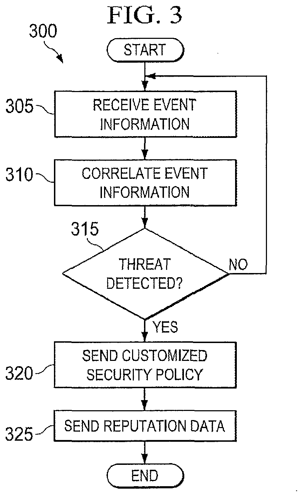

FIGURE 3 is a simplified flowchart 300 illustrating potential operations that may be associated with certain embodiments of network environment 10. In particular embodiments, such operations may be executed by event analysis sub-cloud 20, for example. At 305, event information may be received. Event information may, for example, be pushed or pulled from threat intelligence cloud 15. In some embodiments, the event information may be reported by sensors distributed through a network environment (e.g., network environment 10). The event information may be correlated at 310. If correlation reveals a threat at 315, a customized security policy may be sent to at least one of the sensors at 320. The customized security policy can be based in part or in whole on the threat identified at 315. Reputation data (which may also be based in part or in whole on the threat detected at 315) may be sent at 320. For example, correlation of event information may identify a threat associated with a particular network address and sub-cloud 20 may send an update of the network address's reputation to threat intelligence cloud 15.

Thus, network environment 10 may provide significant advantages, some of which have already been described. More particularly, local security countermeasures can use locally tuned policy to provide protection against threats based on the local network's needs, and network environment 10 can connect each of the local sensors (i.e., sensors 25a-25c) into one global threat intelligence network. In network environment 10, local security countermeasures are no longer merely reactive to the latest threat. Intelligence about new threats may be pushed automatically to management systems, allowing them to proactively protect a network. Moreover, network environment 10 may significantly reduce total cost of ownership for security countermeasures by leveraging a cloud-based infrastructure for proactive tuning.

Note that with the examples provided above, interaction may be described in terms of two, three, or four network elements. However, this has been done for purposes of clarity and example only. In certain cases, it may be easier to describe one or more of the functionalities of a given set of flows by only referencing a limited number of network elements. It should be appreciated that network environment 10 (and its teachings) are readily scalable and can accommodate a large number of components, as well as more complicated/sophisticated arrangements and configurations. It should also be appreciated that the principles described herein in the particular context of an IPS may be readily extended to other types of network elements, such as gateways, firewalls, etc., or to host systems, such as an antivirus system. Accordingly, the examples provided should not limit the scope or inhibit the broad teachings of network environment 10 as potentially applied to a myriad of other architectures. Additionally, although described with reference to particular scenarios, where operations may be associated with a given network element, these operations can be implemented externally, or consolidated and/or combined in any suitable fashion. In certain instances, certain elements may be provided in a single proprietary module, device, unit, etc.

It is also important to note that the steps in the appended diagrams illustrate only some of the possible signaling scenarios and patterns that may be executed by, or within, network environment 10. Some of these steps may be deleted or removed where appropriate, or these steps may be modified or changed considerably without departing from the scope of teachings provided herein. In addition, a number of these operations have been described as being executed concurrently with, or in parallel to, one or more additional operations. However, the timing of these operations may be altered considerably. The preceding operational flows have been offered for purposes of example and discussion. Substantial flexibility is provided by network environment 10 in that any suitable arrangements, chronologies, configurations, and timing mechanisms may be provided without departing from the teachings provided herein.

Numerous other changes, substitutions, variations, alterations, and modifications may be ascertained to one skilled in the art and it is intended that the present disclosure encompass all such changes, substitutions, variations, alterations, and modifications as falling within the scope of the appended claims. In order to assist the United States Patent and Trademark Office (USPTO) and, additionally, any readers of any patent issued on this application in interpreting the claims appended hereto, Applicant wishes to note that the Applicant: (a) does not intend any of the appended claims to invoke paragraph six (6) of 35 U.S.C. section 112 as it exists on the date of the filing hereof unless the words "means for" or "step for" are specifically used in the particular claims; and (b) does not intend, by any statement in the specification, to limit this disclosure in any way that is not otherwise reflected in the appended claims.

According to one example aspect, the method comprises receiving event information associated with reports from sensors distributed throughout a network environment, correlating the event information to identify a threat, and sending a customized security policy to at least one of the sensors based on the threat.

In one embodiment, the method further comprises sending reputation data to a reputation system based on the threat.

In another embodiment, the method further comprises sending reputation data to a threat intelligence cloud based on the threat.

According to an embodiment, the sensors comprise intrusion prevention systems.

According to an embodiment, the customized security policy quarantines a host infected with the threat.

According to another embodiment, the event information is received from a threat intelligence cloud.

In yet another embodiment, the method further comprises sending reputation data to a threat intelligence cloud based on the new threat, and wherein the event information is received from a threat intelligence cloud, the sensors comprise intrusion prevention systems, and the customized security policy quarantines a host infected with the new threat.

According to one further aspect, logic encoded in one or more non-ransitory media that includes code for execution and when executed by one or more processors is operable to perform operations comprising receiving event information associated with reports from sensors distributed throughout a network environment, correlating the event information to identify a threat, and sending a customized security policy to at least one of the sensors based on the threat.

According to one embodiment, the operations further comprise sending reputation data to a reputation system based on the threat.

In yet another embodiment, the operations further comprise sending reputation data to a threat intelligence cloud based on the threat.

In one embodiment, the sensors comprise intrusion prevention systems.

According to another embodiment, the customized security policy quarantines a host infected with the threat.

In yet another embodiment, the event information is received from a threat intelligence cloud.

According to yet another aspect, an apparatus comprises one or more processors operable to execute instructions associated with an event analysis sub-cloud such that the apparatus is configured for: receiving event information associated with reports from sensors distributed throughout a network environment, correlating the event information to identify a threat, and sending a customized security policy to at least one of the sensors based on the threat.

In one embodiment, the apparatus is further configured for sending reputation data to a reputation system based on the threat.

In another embodiment, the apparatus is further configured for sending reputation data to a threat intelligence cloud based on the threat.

According to yet another embodiment, the sensors comprise intrusion prevention systems.

In another embodiment, the customized security policy quarantines a host infected with the threat.

According to one embodiment, the event information is received from a threat intelligence cloud.

According to yet another aspect, an apparatus comprises a threat intelligence cloud, an event analysis sub-cloud, and one or more processors operable to execute instructions associated with the threat intelligence cloud and the event analysis sub-cloud such that: the threat intelligence cloud is configured for receiving event information associated with reports from sensors distributed throughout a network environment, and the event analysis sub-cloud is configured for correlating the event information to identify a threat and sending a customized security policy to at least one of the sensors based on the threat.

## Claims

1. A method, comprising:
correlating (310) a plurality of event information to identify a threat, the plurality of event information to be received (305) by a threat intelligence cloud or an event analysis sub-cloud from a plurality of sensors distributed throughout a network environment to gather information from a plurality of hosts in the network environment across threat vectors, wherein at least some of the plurality of sensors are in separate domains;
providing (320) guidance regarding the identified threat; and
adjusting (325) reputation data in the threat intelligence cloud for the identified threat so that the identified threat can be blocked without manual intervention throughout the network environment.

2. The method of Claim 1, further comprising:
enabling one or more response actions to block the identified threat.

3. The method of any one of Claims 1-2, further comprising:
automatically adjusting signature set configurations to block the identified threat.

4. The method of any one of Claims 1-3, further comprising:
providing a security policy to quarantine a host infected with the identified threat.

5. The method of any one of Claims 1-4, further comprising:
providing (325) results of the correlating to be used to adjust the reputation data for the identified threat.

6. The method of any one of Claims 1-5, further comprising:
informing (320) one or more sensors of the plurality of sensors of the identified threat.

7. The method of any one of Claims 1-6, wherein the correlating includes identifying the threat targeting a particular country, region, or industry by correlating the plurality of event information reported by the sensors provided in the particular country, region, or industry.

8. The method of any one of Claims 1-7, wherein the event information includes any one or more of a source address of a connection, a destination address of the connection, a type of activity associated with the connection, identification of a downloaded file associated with the connection, and one or more protocols associated with the connection.

9. The method of any one of Claims 1-8, wherein the threat intelligence cloud includes a reputation system.

10. The method of any one of Claims 1-9, wherein the event information is received by the threat intelligence cloud in real-time.

11. The method of any one of Claims 1-10, wherein the identified threat is detected by the plurality of sensors globally.

12. An apparatus comprising means for performing the method of any of the preceding claims.

13. The apparatus of Claim 12, wherein the means for performing the method comprise at least one processor and at least one memory element,

14. At least one machine readable medium comprising instructions that, when executed, implement a method or realize an apparatus as claimed in any preceding claim.

15. A system, comprising:
a threat intelligence cloud (15);
an event analysis sub-cloud (20); and
one or more processors operable to execute instructions associated with the threat intelligence cloud (15) and the event analysis sub-cloud (20) to:
correlate a plurality of event information to identify a threat, the plurality of event information to be received by the threat intelligence cloud (15) from a plurality of sensors (25a-25c) distributed throughout a network environment (10) to gather information from a plurality of hosts (30a-30i) in the network environment (10) across threat vectors, wherein at least some of the plurality of sensors (25a-25c) are in separate domains;
provide guidance regarding the identified threat; and
adjust reputation data in the threat intelligence cloud (15) for the identified threat so that the identified threat can be blocked without manual intervention throughout the network environment (10).

16. The system of Claim 15, wherein the one or more processors are operable to execute the instructions to:
enable one or more response actions to block the identified threat.

17. The system of any one of Claims 15-16, wherein the identified threat is detected by the plurality of sensors (25a-25c) globally.

## Patentansprüche

1. Verfahren, das folgende Schritte umfasst:
Korrelieren (310) einer Vielzahl von Ereignisinformationen, um eine Bedrohung zu identifizieren, wobei die Vielzahl von Ereignisinformationen von einer Gefahreninformations-Cloud oder einer Ereignisanalyse-Teil-Cloud von einer Vielzahl von Sensoren empfangen werden soll (305), die über eine Netzwerkumgebung verteilt sind, um Informationen von einer Vielzahl von Hosts in der Netzwerkumgebung über Bedrohungsvektoren zu sammeln, wobei zumindest einige aus der Vielzahl von Sensoren in separaten Domänen liegen;
Bereitstellen (320) von Leitlinien in Bezug auf die identifizierte Bedrohung; und
Anpassen (325) von Reputationsdaten in der Gefahreninformations-Cloud für die identifizierte Bedrohung, sodass die identifizierte Bedrohung ohne manuelle Eingriffe in der gesamten Netzwerkumgebung blockiert werden kann.

2. Verfahren nach Anspruch 1, ferner umfassend:
Aktivieren einer oder mehrerer Reaktionsaktionen, um die identifizierte Bedrohung zu blockieren.

3. Verfahren nach einem der Ansprüche 1-2, ferner umfassend:
automatisches Anpassen von Signatursatzkonfigurationen, um die identifizierte Bedrohung zu blockieren.

4. Verfahren nach einem der Ansprüche 1-3, ferner umfassend:
Bereitstellen einer Sicherheitsrichtlinie, um einen mit der identifizierten Bedrohung infizierten Host unter Quarantäne zu stellen.

5. Verfahren nach einem der Ansprüche 1-4, ferner umfassend:
Bereitstellen (325) von Ergebnissen des Korrelierens, die zur Anpassung der Reputationsdaten für die identifizierte Bedrohung verwendet werden sollen.

6. Verfahren nach einem der Ansprüche 1-5, ferner umfassend:
Informieren (320) eines oder mehrerer Sensoren aus der Vielzahl von Sensoren über die identifizierte Bedrohung.

7. Verfahren nach einem der Ansprüche 1-6, wobei das Korrelieren ein Identifizieren der Bedrohung umfasst, die auf ein bestimmtes Land, eine bestimmte Region oder eine bestimmte Branche abzielt, durch Korrelieren der Vielzahl von Ereignisinformationen, die von den in dem bestimmten Land, der Region oder der Branche bereitgestellten Sensoren bereitgestellt werden.

8. Verfahren nach einem der Ansprüche 1-7, wobei die Ereignisinformationen ein beliebiges aus einem oder mehreren aus einer Quelladresse einer Verbindung, einer Zieladresse der Verbindung, einem Typ einer Aktivität, die der Verbindung zugeordnet ist, einer Identifizierung einer heruntergeladenen Datei, die der Verbindung zugeordnet ist, und einem oder mehreren Protokollen, die der Verbindung zugeordnet sind, aufweist.

9. Verfahren nach einem der Ansprüche 1-8, wobei die Gefahreninformations-Cloud ein Reputationssystem aufweist.

10. Verfahren nach einem der Ansprüche 1-9, wobei die Ereignisinformationen in Echtzeit von der Gefahreninformations-Cloud empfangen werden.

11. Verfahren nach einem der Ansprüche 1-10, wobei die identifizierte Bedrohung durch die Vielzahl von Sensoren weltweit erkannt wird.

12. Vorrichtung mit Mitteln zum Durchführen des Verfahrens nach einem der vorhergehenden Ansprüche.

13. Vorrichtung nach Anspruch 12, wobei die Mittel zum Durchführen des Verfahrens mindestens einen Prozessor und mindestens ein Speicherelement umfassen.

14. Mindestens ein maschinenlesbarer Datenträger mit Befehlen, die, wenn sie ausgeführt werden, ein Verfahren implementieren oder eine Vorrichtung realisieren, wie in einem der vorhergehenden Ansprüche beansprucht.

15. System, das Folgendes umfasst:
eine Gefahreninformations-Cloud (15);
eine Ereignisanalyse-Teil-Cloud (20); und
einen oder mehrere Prozessoren, die eingerichtet sind, Befehle auszuführen, die der Gefahreninformations-Cloud (15) und Ereignisanalyse-Teil-Cloud (20) zugeordnet sind, um:
eine Vielzahl von Ereignisinformationen zu korrelieren, um eine Bedrohung zu identifizieren, wobei die Vielzahl von Ereignisinformationen von der Gefahreninformations-Cloud (15) von einer Vielzahl von Sensoren (25a-25c) empfangen werden soll, die über eine Netzwerkumgebung (10) verteilt sind, um Informationen von einer Vielzahl von Hosts (30a-30i) in der Netzwerkumgebung (10) über Bedrohungsvektoren zu sammeln, wobei zumindest einige aus der Vielzahl von Sensoren (25a-25c) in separaten Domänen liegen;
Leitlinien in Bezug auf die identifizierte Bedrohung bereitzustellen; und
Reputationsdaten in der Gefahreninformations-Cloud (15) für die identifizierte Bedrohung so anzupassen, dass die identifizierte Bedrohung ohne manuelle Eingriffe in der gesamten Netzwerkumgebung (10) blockiert werden kann.

16. System nach Anspruch 15, wobei der eine oder die mehreren Prozessoren eingerichtet sind, die Anweisungen auszuführen, um:
eine oder mehrere Reaktionsaktionen zu aktivieren, um die identifizierte Bedrohung zu blockieren.

17. System nach einem der Ansprüche 15-16, wobei die identifizierte Bedrohung durch die Vielzahl von Sensoren (25a-25c) weltweit erkannt wird.

## Revendications

1. Procédé, comprenant les étapes ci-dessous consistant à :
corréler (310) une pluralité d'informations d'événement en vue d'identifier une menace, la pluralité d'informations d'événement étant destinée à être reçue (305) par un nuage de renseignement sur les menaces ou un sous-nuage d'analyse d'événements en provenance d'une pluralité de capteurs répartis à travers un environnement de réseau pour collecter des informations à partir d'une pluralité d'hôtes dans l'environnement de réseau à travers des vecteurs de menace, dans lequel au moins certains capteurs de la pluralité de capteurs sont dans des domaines distincts ;
fournir (320) une orientation concernant la menace identifiée ; et
ajuster (325) des données de réputation dans le nuage de renseignement sur les menaces pour la menace identifiée, de sorte que la menace identifiée peut être bloquée sans intervention manuelle à travers l'environnement de réseau.

2. Procédé selon la revendication 1, comprenant en outre l'étape ci-dessous consistant à :
permettre à une ou plusieurs actions d'intervention de bloquer la menace identifiée.

3. Procédé selon l'une quelconque des revendications 1 à 2, comprenant en outre l'étape ci-dessous consistant à :
ajuster automatiquement des configurations d'ensembles de signatures en vue de bloquer la menace identifiée.

4. Procédé selon l'une quelconque des revendications 1 à 3, comprenant en outre l'étape ci-dessous consistant à :
fournir une politique de sécurité pour mettre en quarantaine un hôte infecté par la menace identifiée.

5. Procédé selon l'une quelconque des revendications 1 à 4, comprenant en outre l'étape ci-dessous consistant à :
fournir (325) des résultats de la corrélation à utiliser pour ajuster les données de réputation pour la menace identifiée.

6. Procédé selon l'une quelconque des revendications 1 à 5, comprenant en outre l'étape ci-dessous consistant à :
signaler (320) la menace identifiée à un ou plusieurs capteurs de la pluralité de capteurs.

7. Procédé selon l'une quelconque des revendications 1 à 6, dans lequel l'étape de corrélation inclut l'étape consistant à identifier la menace ciblant un pays spécifique, une région spécifique, ou un secteur industriel spécifique, en corrélant la pluralité d'informations d'événement signalées par les capteurs fournis dans le pays, la région ou le secteur industriel spécifique.

8. Procédé selon l'une quelconque des revendications 1 à 7, dans lequel les informations d'événement incluent l'un quelconque ou plusieurs des éléments parmi une adresse source d'une connexion, une adresse de destination de la connexion, un type d'activité associé à la connexion, l'identification d'un fichier téléchargé associé à la connexion, et un ou plusieurs protocoles associés à la connexion.

9. Procédé selon l'une quelconque des revendications 1 à 8, dans lequel le nuage de renseignement sur les menaces inclut un système de réputation.

10. Procédé selon l'une quelconque des revendications 1 à 9, dans lequel les informations d'événement sont reçues par le nuage de renseignement sur les menaces en temps réel.

11. Procédé selon l'une quelconque des revendications 1 à 10, dans lequel la menace identifiée est détectée mondialement par la pluralité de capteurs.

12. Appareil comprenant des moyens pour mettre en oeuvre le procédé selon l'une quelconque des revendications précédentes.

13. Appareil selon la revendication 12, dans lequel les moyens pour mettre en oeuvre le procédé comprennent au moins un processeur et au moins un élément de mémoire.

14. Au moins un support lisible par machine comprenant des instructions qui, lorsqu'elles sont exécutées, mettent en oeuvre un procédé, ou réalisent un appareil, selon l'une quelconque des revendications précédentes.

15. Système, comprenant :
un nuage de renseignement sur les menaces (15) ;
un sous-nuage d'analyse d'événements (20) ; et
un ou plusieurs processeurs exploitables de manière à exécuter des instructions associées au nuage de renseignement sur les menaces (15) et au sous-nuage d'analyse d'événements (20) en vue de :
corréler une pluralité d'informations d'événement en vue d'identifier une menace, la pluralité d'informations d'événement étant destinée à être reçue par le nuage de renseignement sur les menaces (15) en provenance d'une pluralité de capteurs (25a-25c) répartis à travers un environnement de réseau (10) pour collecter des informations à partir d'une pluralité d'hôtes (30a-30i) dans l'environnement de réseau (10) à travers des vecteurs de menace, dans lequel au moins certains capteurs de la pluralité de capteurs (25a-25c) sont dans des domaines distincts ;
fournir une orientation concernant la menace identifiée ; et
ajuster des données de réputation dans le nuage de renseignement sur les menaces (15) pour la menace identifiée, de sorte que la menace identifiée peut être bloquée sans intervention manuelle à travers l'environnement de réseau (10).

16. Système selon la revendication 15, dans lequel ledit un ou lesdits plusieurs processeurs sont exploitables de manière à exécuter les instructions en vue de :
permettre à une ou plusieurs actions d'intervention de bloquer la menace identifiée.

17. Système selon l'une quelconque des revendications 15 à 16, dans lequel la menace identifiée est détectée mondialement par la pluralité de capteurs (25a-25c).
